# EUROPEAN PATENT SPECIFICATION

(11) **EP 1 267 316 B1**
(45) Date of publication and mention of the grant of the patent: **31.12.2008**
(21) Application number: 01810586.6
(22) Date of filing: 17.06.2001
(51) Int. Cl.: G09B 23/04

(54) **Mechanical apparatus for demonstrating trigonometric functions, and drawing its graphs**
Einrichtung zum Demonstrieren von trigonometrischen Funktionen und zum Darstellen ihrer Graphs
Appareil mécanique pour démontrer des fonctions trigonométriques et pour dessiner ses courbes

(43) Date of publication of application: 18.12.2002
(73) Proprietor: Deeb, Abdulhaleem, Jeddah 21351 (SA)
(72) Inventor: Deeb, Abdulhaleem, Jeddah 21351 (SA)
(74) Representative: Sevinç, Erkan

(56) References cited:
- US-A- 3 359 654
- PATENT ABSTRACTS OF JAPAN vol. 2000, no. 06, 22 September 2000 (2000-09-22) & JP 2000 089661 A (TOKAI UNIV;TOKAI KYOIKU SANGYO KK), 31 March 2000 (2000-03-31)

## Description

### Field of the invention:

The invention pertains to a sensible apparatus of hardware to be used as educational mean, to demonstrate and simplify many essential concepts in geometry and trigonometry, which are fundamentals in Mathematics taught at schools within secondary stage in all countries. The Invention is a mechanical apparatus for demonstrating Trigonometric Circle and identifying Trigonometric functions; Sin, Cos, Tan, Cot and to define the most important properties of these functions, and draw its graphs.

### Background:

It is known and common among all concerned in mathematics that the existing educational means of mathematics are absolutely nil or extremely rare especially for secondary-stage. The few trials which were done up to date to add some creations or inventions that simplify the theories of Math are all rounding about Geometry, whilst, the most of other subjects nothing exists and completely neglected.

There is actual problem in this regard all over the world about the difficulties in teaching this subject and the difficulties that students face to understand and realize theoretical concepts and/or to work on the applied cases and problems. The problem is not limited to the lower classes, but extended to the higher education stages.

It is easier to understand sensible ideas and concepts much more than understanding the pure theories. The invention of a sensible means to demonstrate those pure theories offers a great favor to make it easy for all students and for general studies.

The efforts paid to have easy mathematics are insufficient and no comparison can be held with any other scientific subject (Physics, Geography, Biology or Chemistry). It is not fair to utilize mathematics in all sciences, and not to utilize other sciences in Mathematics especially the Mechanics; design and make demonstrating means to help and simplify math.

US 3,359,654 discloses an apparatus for two dimensional demonstrations of trigonometric functions, where the construction briefly comprises a rectangular back board, a bar representing the hypotenuse mounted on two pins; one being on a central disc and the other on a vertical bar for pivotal movement 180 degrees around the central pin. However, the construction mainly differs from the present invention in that the device of the present invention comprises bars moving perpendicularly throughout the coordinate axes during the circular motion on a quadratic plane.

The reason for that poor effort, might be the fear of this approach or the despondence to do something for the deeply pure concepts of Mathematics, or considering them difficult to simulate or resemble, despite this is may be true often, but not always. Such feeling could obstruct the creative mind to not even think of doing something in this important field.

Throughout my long practical experience of Mathematics teaching and education, I came to pass this obstacle and could enter to blank field while had not been ever reached. I reached to several groups and subfamilies of creations could be classified in two wags: either by mathematical topics or by the technical foundations and technical and manufacturing principles they deponed on. Will start with one of the means from the second category (depending on the mechanical movement)

### Summary of the invention

The main objective of this invention is to solve the problem students face to understand some fundamentals in geometry, and to recognize the Trigonometric functions (Sin -Cos - Tan - Cot). Demonstrating the most important properties & features.

The invention aims at explaining the concept of "Arc". Student can see and touch-by-hand unlimited number of arcs with different positive and negative values .

The invention aims at showing the close relation between the Angle and the Arc. That provides a visual simulation to both Angle and the opposite Arc, which clears a lot of interference of students about the concept of Angle and concept of Arc.

The invention aims at demonstrating the concept of (Radian) which is a measurement unit of Angles and Arcs depending on the radius of the circle .

The invention aims at explaining the basic concepts of the trigonometric functions : Sin, Cos, Tan and Cot ; demonstrating their changes, their main properties, some of the most important relations. The invention aims at drawing the graphs of trigonometric functions : Sin , Cos , Tan and Cot.

### Description :

The invention is composed of two parts, the first quadrant part and the whole circle part . First quadrant part is for demonstrating all the four basic Trigonometric Functions but only in the first quadrant of the plane, i. e. the range of angle G is [0°, 90°], while the whole circle part is for demonstrating only the Sin and Cos Functions but in the whole plane, i. e. the range of angle G is [0°, 360°]. (90° means 90 degrees and so on).

Items of one part numbered as like as that of the other part, sometimes adding the letter (a) to the number if the said item has some changes . Particularly, the bar working as radius to the said circle No.9 is numbered with 6 where the extended bar is numbered with 6a, a sliding segment in the first quadrant part is numbered with 7 while it is numbered in the whole circle part with 7a, and so on.

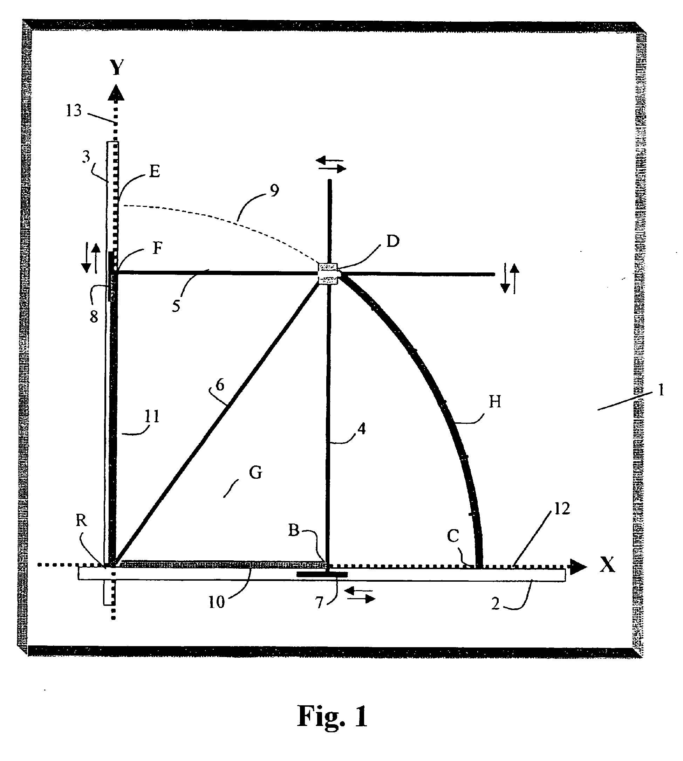

(Fig. 1) consists of transparent plastic board No.1, with two paths fixed on the said board : path No 2, and path No.3 perpendicular to No.2 . Piece No.7 slides on path No.2. Bar No.4 had fixed perpendicularly on said piece No.7 that the group (4, 7) moves as if it is one piece , so that the rigid bar No.4 (which is made of metal , plastic, wood ..etc) slides right and left , ever parallel to itself.

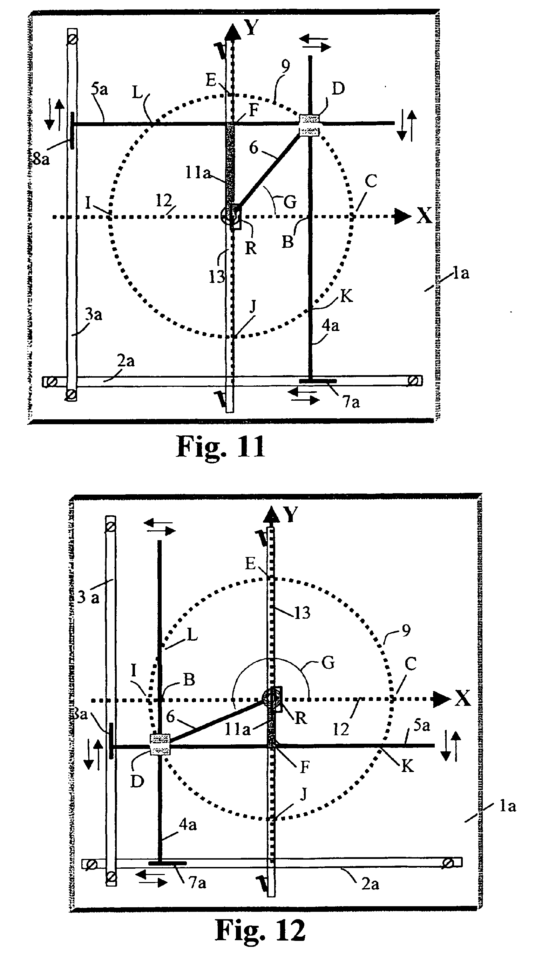

In the same way bar No.5 slides up and down, ever parallel to itself. Straight segment No.6 rotate around the fixed point R with fixed length RD, hence the path of the point D is circular , that is D moves on the circle 9.
The circle 9 had been drawn on the board 1a as a blue dotted line, as well on board 1a of (Fig. 11 & 12).

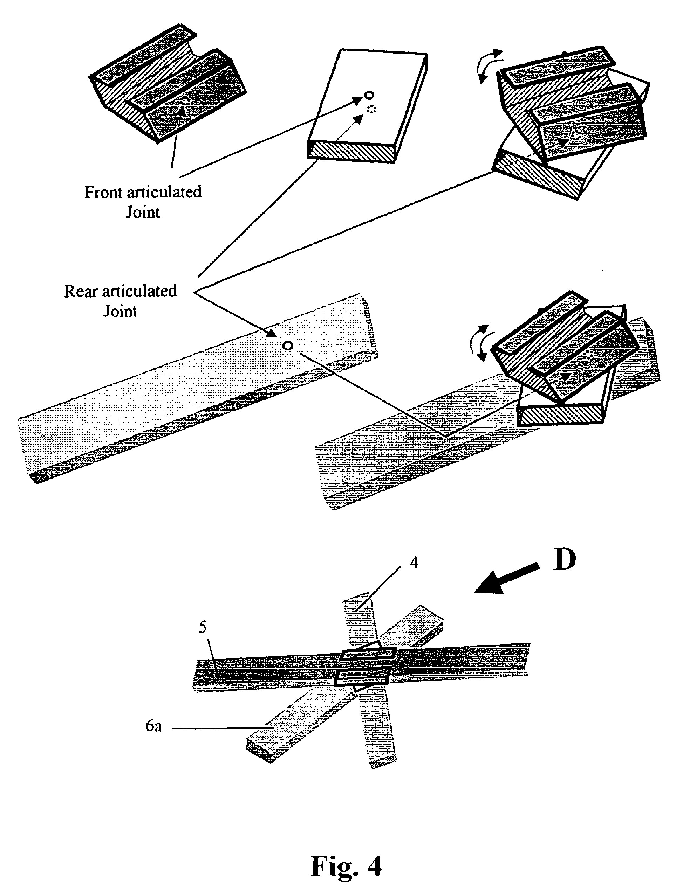

D is a sliding knob combines the three bars (4, 5, 6) together. See (Fig. 4). D allows the two bars (4, 5) slid throw it, while it is connected to the edge of the bar No.6 through the hole at the said bar .

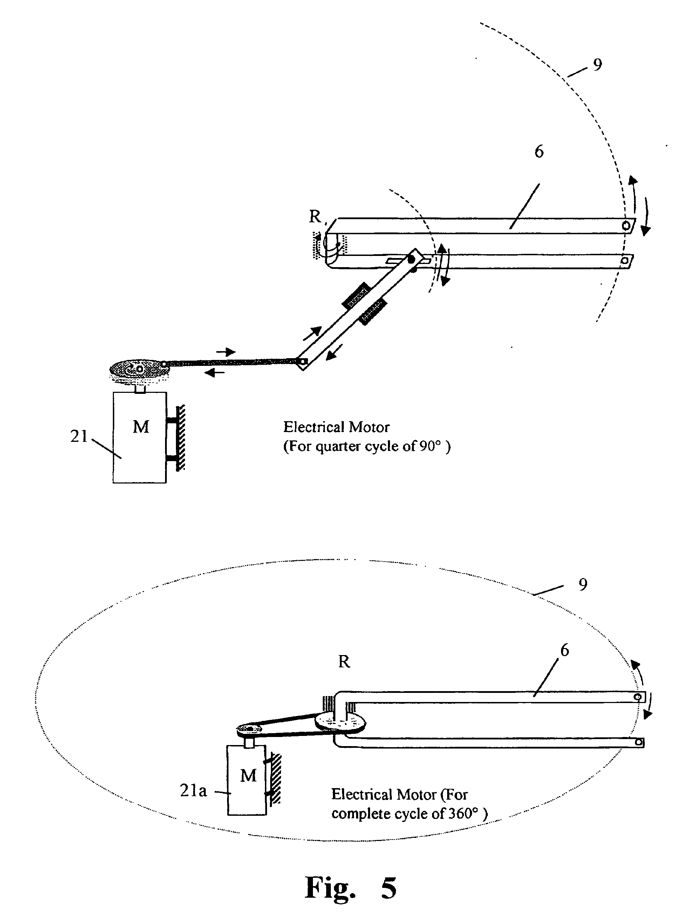

Electrical motor No.21 of (Fig. 5) moves the system in (Fig. 1 & 2 & 3) when necessary as an alternative of manual moving , especially for designs of huge sizes for museums, big galleries .. etc. so the said knob D slides and changes its position , but always remains tied up to the circle No.9.

That motion for the whole system is being easy and simple by help of easy sliding of segments (7 , 8) in its paths, easy sliding of bars (4 , 5) through the knob D and the easy rotation of bar No.6 around the center R of the circle 9 Said motor No.21 has a gearbox for slowing the motion .

The electrical motor 21 have movement period of 90°, and located behind the board No.1 of the first quadrant part of the invention , and motor 21a have movement period of 360° and located behind the board No.1 of the whole circle part. see (Fig. 5).

Note : Manufacturing of the invention would be done by several versions according to the size of the apparatus , starting with personal size , and school-size , up to huge sizes for Science museums and centers , in which high power motors is needed .

Board No.1 of (Fig. 1) is all transparent except the area under the bar No.2 left to the bar No.3, that is the transparent area is up of the bar No.2, and right to the bar No.3. Said board No. 1 has gradients closed to the drawn line No.12 which denotes the X coordinate axis , while the said board has gradients closed to the drawn line No.13 which denotes the Y coordinate axis. The said gradients could be used for approximate reading of the Sin and Cos values of the angle G .

Bar No.6 has back part parallel to the front part connected to it by a small curve, so the bar No.6 have the shape of the letter U . It rotates around the connecting point of its two parts, which path through the center R of the circle in such a way that the two legs of the bar No.6 appears parallel to each others as if they enfold the said board No.1 from its two sides.

The said back part of bar No.6 has more than one task; it works as a base for moving the system because the electrical motors are connected to it. See (Fig. 5). Said back part also pulls out the yellow plate of G during the rotation of said back part around the center R of the circle 9 and finally it pulls out the fiber glass rope H during its rotation .

In (Fig. 1) the smaller circular section is a part of the shown surface bounded by bar No.2, bar No.6 and the arc G of the inner circle. The said section is composed of a plate, yellow colored now, made of plastic, metal, cloth, etc, located back to the board No.1, such as one of its edges is tied to the back part of the bar No.6 . The said part pulls the yellow plate through the motion of the system, so the angle DRC between bars 6 & 2 can be big or small according to the changeable position of the said bar No.6 . The unseened part of the said yellow plate is been hidden behind the non transparent part of the board No.1. The task of the said yellow circular section is to be as an indicator to the angle < DRC as it is familiar in Geometry.

In (Fig. 5) motor No.21 is connected to the back part of the said bar No.6 by two moving axes that cause the said back part of bar No.6 rotates around the center R of the said circle No.9 for a period of 90° . The two connection axes and the back part of said bar No.6 is being all in the same plane. while the front part of said bar No.6 is parallel to that plane, and body of said motor No.21 is perpendicular to the said plane. Thus said motor enables moving the whole system, especially knob D, moving from C to E and returning back from E to C and so on.

Motor No.21a of (Fig. 5) enables bar No.6 and hence the whole system , rotates around the center R of the circle No.9 for a complete cycle of 360°.

When moving the system in (Fig. 1), the value of the angle G increases or decreases according to the direction of the movement. When the motion is counterclockwise , the value of angle G increases, when the motion is clockwise , the value of angle G decreases.

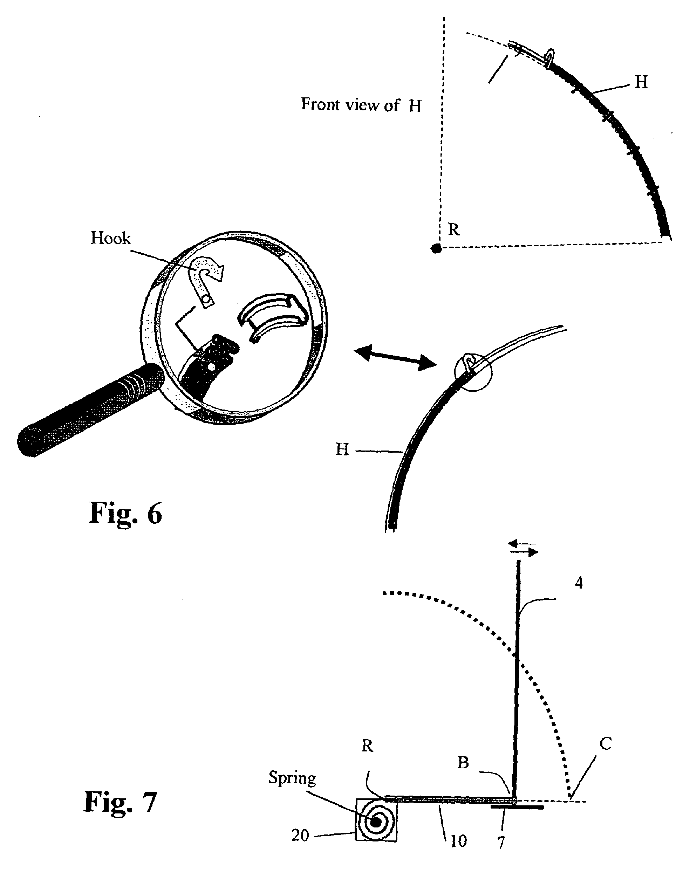

Now H denotes a piece of fiber glass rope , slides in a special curvilinear path, at the back side of the board No. 1, located beneath the circle No.9 , in which the part of the rope H appears as if it is a part of the said circle. See (Fig. 6).

The whole circle part of (Fig. 11 & 12) has a similar fiber glass rope H, its edge is connected to the back part of bar No.6 by a special hook, representing different arcs, including the complete circle No.9 during the rotation of bar No.6 for 360°. A small lamp is connected to the other edge of the rope H , so the visual part H of the said rope will be luminous, sharp and beautiful representative to the said arc H .

When moving the system in (Fig. 1), such as the knob D moves counterclockwise , i.e. high - left direction, the back part of bar No.6 pulls out the edge of the rope H, and the said rope H remains tied up to the circle No.9. When the knob D moves back , i.e. clockwise direction, the rope H also moves back by help of the spring pulling it back as in (Fig. 7). So the rope H represents the arc opposite to the angle G . The said arc H has the same value as that of angle G . For example if the value of the angle G is 20°, then the value of the opposite arc H is also 20°, and so on. (We write : 20° for both).

The rope H of (Fig. 1) is divided into equal parts by small colored signals. The arc between two next signals represents 10°. Gradients of rope H enable reading the measure of corresponding arc. Such reading provides approximate values, which is sufficient enough for educational purposes. Of course class protractor could provide with better definite value for the arc H . (Which would be the value of the angle G at the same time).

The box No.20 of (Fig. 7) is located at the back side of the board 1 of (Fig. 1). The ribbon No.10, which is similar to the sewing meter, is spirally curved and spout out of the said box, then extrude to the front surface through a hole at the position R in the said board No.1. Thus the edge of the said ribbon No.10 is connected to the bar No.4 at the point B .

Ribbon No.10 increases when bar 4 moves right, i.e. out of center R of the circle 9, while its length decreases when bar 4 moves left, i.e. close to the center R of the circle 9 . The said ribbon No.10 is colored green in present example .

Ribbon No.11 of (Fig. 1) is exactly similar to said ribbon No.10, and colored red in present example . Ribbon No.11 increases when bar 5 moves up, i.e. out of center R of the circle, while its length decreases when bar 5 moves down, i.e. close to the center R of the circle 9 .

The whole circle part of the invention has another indicators for Trigonometric functions, because the indicators similar to 10 and 11 of the said first quadrant part prevent the system of whole circle part moves completely.

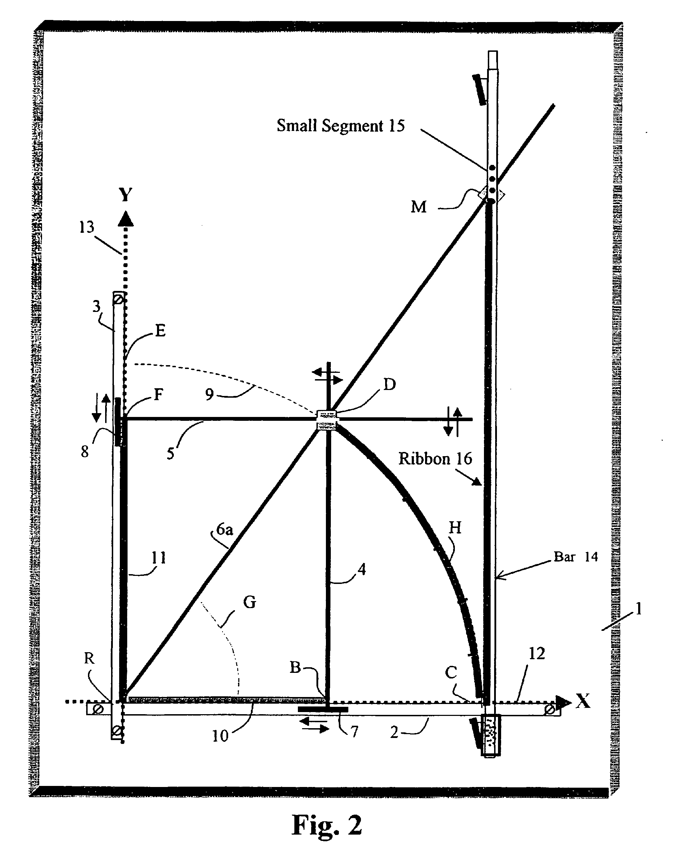

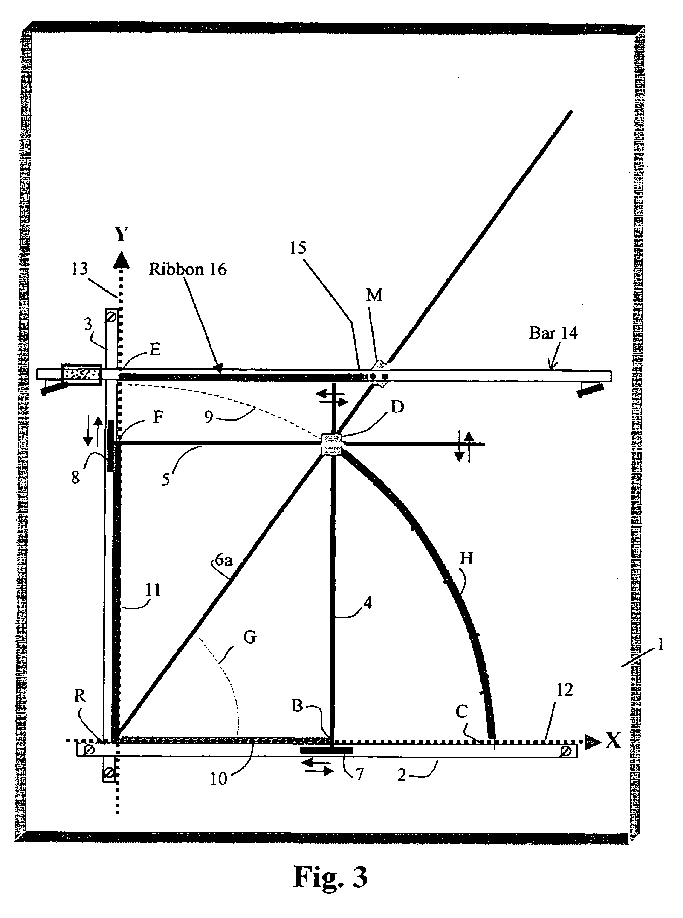

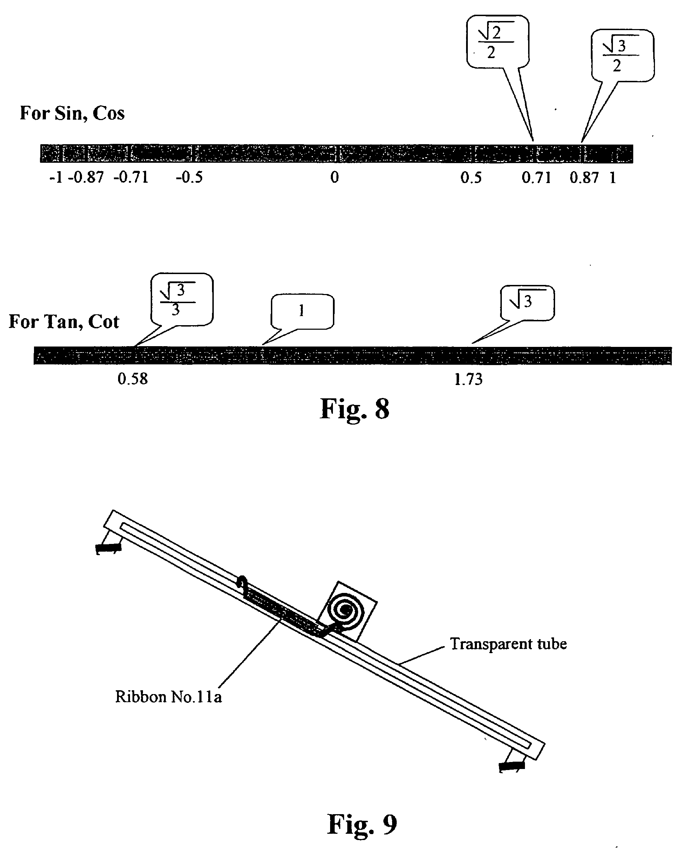

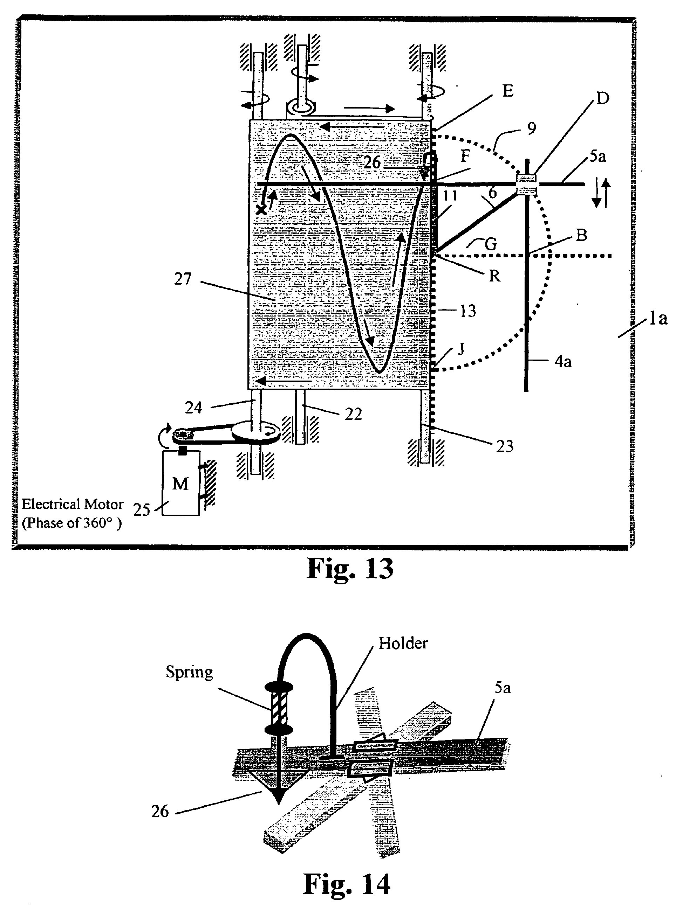

In (Fig. 11) we see the indicator No. 11a of Sin function makes a bridge over the system with ribbon and small hook moving through the transparent tube, which has a long groove for the hook, and two basis outside the components of the system. See (Fig. 9). Each one of the said basis has protrusions for installing, either at the board No. I of (Fig. 2&3), or the board No.1a of (Fig. 11&12&13), in such a way that the indicators 11a or 16 could be installed and uninstalled easily. The ribbon 11a is connected by the hook to the holder (base) of the pen No.26. See (Fig. 14) . When bar 5a moves up and down, it pulls the said ribbon 11a connected to it , to be shown clearly throughout the said transparent plastic tube, indicating the Sin function . In the same way 10a indicates Cos function at the horizontal position .

### Brief description of drawings :

Numerous other objects, features and advantages of the invention should now become apparent upon a reading of the following, in which
Fig. 1 shows a simplified front view of the first quadrant part of the present invention, showing constructions and ribbons for Sin and Cos functions.
Fig. 2 is the same as Fig. 1 showing constructions of Tan function, has been installed as a separate path and indicator, which could be installed or uninstalled as required.
Fig. 3 is the same as Fig. 1 showing constructions of Tan function, has been installed at the other position to represent the Cot function.
Fig. 4 & 5 & 6 show sliding knob, electrical motors with gearboxes for moving the system and fiber glass rope representing an arc of the circle with its groove or furrow.
Fig. 7 & 8 show ribbon with its box, gradients of ribbons for Sin or Cos, and for Tan or Cot functions.
Fig. 9 shows the other indicator of Sin, Cos, Tan and Cot functions.
Fig. 10 shows the indicator of Fig. 9 combined with path bar for representing Tan and Cot as it is shown in Fig. 2 & 3.
Fig. 11 & 12 shows the Whole circle part of the present invention, showing constructions and indicator of Sin function, and the view of its application in two cases, first for G as an acute angle , and second for 180° < G < 270°.
Fig.13 & 14 show a view of drawing system of the graph of the Sin function and the drawing pen.

### A way of carrying out the invention :

(Fig. 1) shows part of the circle No.9 which is considered as the "trigonometric circle". (Fig. 11) shows the said trigonometric circle completely, with radius RC =1, straight line No.12 drawn on the board 1a as the X coordinate axis, and the straight line No.13 drawn on the board 1a as the Y coordinate axis. So the Coordinates of point D is the Sin and Cos of angle G . This means that ribbon No. 10 represents Cos G, and ribbon No.11 represents Sin G .

As we had seen already , the length of each of the ribbons (10, 11) changes when the angle G changes because of changing position of the two bars (4, 5). This shows how is the present invention provides a visual simulation to the trigonometric circle, the angle G, the functions of Sin and Cos, and the way that the said angle and functions change.

In (Fig. 1), we have seen already that moving of D up-left or counterclockwise from C to E, causes increasing both of value of angle G and length of ribbon No.11 at the same time . This will be much clear when we observe that moving of D clockwise from E to C, causes decreasing of both of value of angle G and length of ribbon No.11 at the same time . This means that both of G and Sin G increase together , and decrees together. So the invention demonstrates that the function Sin is an increasing function.
This fact could be emphasized by moving D up and down, and observing the two points (F, D) how it rise up together and swing down together .

As for Sin function: In (Fig. 1), we have seen already that moving of D up-left or counterclockwise from C to E, causes increasing of value of angle G but the length of ribbon No.10 decreases . So the invention demonstrates that the function Cos is decreasing function . This will be much clear when we observe that moving of D clockwise from E to C, causes decreasing of value of angle G but the length of ribbon No.10 increases . That means, angle G and Cos G are opposite to each other, when G increases the function Cos G is been decreased, and vice versa. So, the invention demonstrates that the function Cos is a decreasing function.

This fact could be emphasized by moving D up and down, and observing the two points (B, D) going advance to the right side together and retreat to the left side together. Thus, the invention demonstrates the important mathematical concept of monotonic functions, practically by a physical, sensible, touchable and eye-noticed manner never been done at all.

(Fig. 2) consists of component of (Fig. 1) with extra path No.14, segment No.15 sliding on said path, knob M connects the two bars (14, 6a) and allows bar 6a go through and slide inside. The bar No.14 could be installed and uninstalled to the said board No. 1 with front face down, in such a way that the segment No.15 and the said knob M are facing the said board No.1. This enables the system rotates with no obstruction, while the knob (M) is articulated to sliding segment (15) and allows bar (6a) slides through.

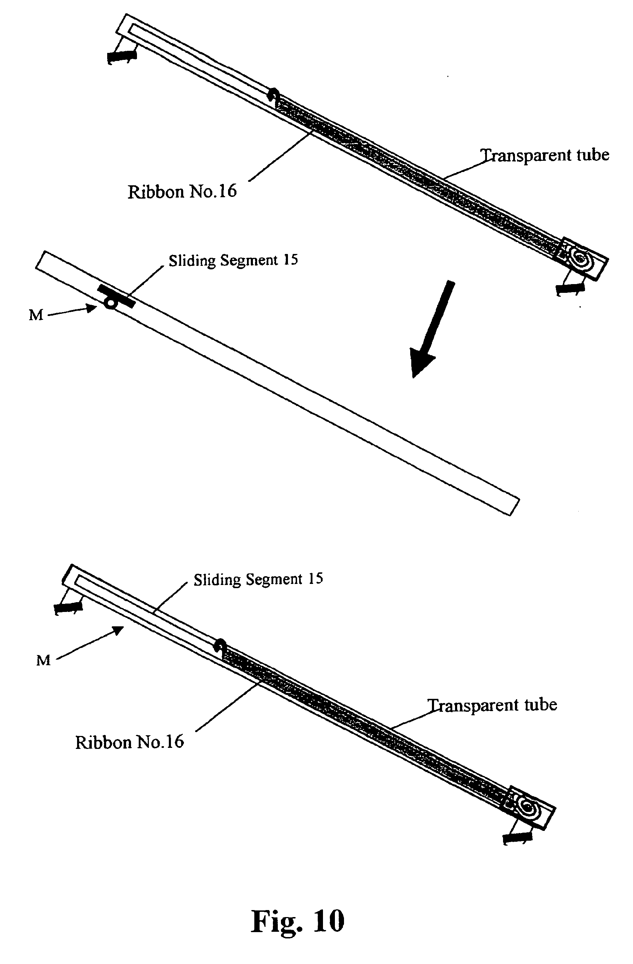

At the same time the indicator of (Fig. 9) could be installed together with bar No. 14 to indicate the Tan function, in which the small hook be connected to the knob M . See (Fig 10). Of course M changes its position but ever tied up to bar No. 14.

It is well known in Mathematics that the length oftangent line represented by ribbon No.16 is the tangent of angle G See triangle MRC (Fig. 2).The present invention provides physical representation for the trigonometric function Tan .

When D moves close to point C , the length of ribbon No. 16 will be very small , so when D is coincident on C , the said ribbon will disappear . This means mathematically that : Tan 0° = 0.

Angle 45° makes triangle MRC of (Fig. 2) an isosceles triangle, so length of ribbon No.16 is equal to the length of RC. So the invention clarifies that: Tan 45° = 1. When D is close to E , the length of ribbon No.16 is too big and huge , so the invention clarifies that tangent of right angle goes far away to infinity. Mathematically we write : Tan 90° = ?.

Practically the apparatus of the present invention could represents efficiently the tangent of the angles up to 70°, or maybe up to 80° for another version of the said apparatus, but it is very difficult to represent the tangent function for the angles approaching 90°.

When making gradient to bar No.14 the value 1 is been marked as the correspondence to the angle 45°, and then the gradients 0.5, 1.5, .. etc. is added as a general indicator to the whole values. A special gradient 0.58 would be marked as an approximation to the tangent of angle 30°, being marked at the board No. with the actual value: ? 3 / 3. Another gradient 1.73 would be marked as an approximation to the tangent of angle 60°, being marked at the board No. with the actual value : ? 3 . See (Fig. 8).

The present invention demonstrates that the tangent function is unlimited function, differing from Sin and Cos functions . The present invention demonstrates also that the tangent values are less than 1 for angles belongs to the interval (0°, 45°), and the values would be greater than 1 for angles belongs to the interval (45°, 90°).

As have seen before, moving the knob D of (Fig. 2), causes changing both of angle G and length of ribbon No. 16 as Tan G. Thus, the present invention enables student repeats moving said knob D up and down , observing with full open eyes and mind that both of angle G and Tan G increase together, and decrease together. This would make student well understand how the tangent function is an increasing function.

As for Tan, bar No.14 with indicator as of (Fig. 10) could be installed at the horizontal position to represent Cot function. because it is well known in Mathematics that the length of tangent line represented by ribbon No.16 is the cotangent of angle G See triangle MRE (Fig. 3).

Returning back to (Fig. 1), it is well known that the length of ribbon No.11 cold be zero, when the edge F approaches to the center R of the circle 9. In the other hand the length of ribbon No.11 increases, but maximum value could approach is 1. So present invention demonstrates that maximum value of Sin G is 1. Mathematically We write : Max (Sin G)=1. This is happened when knob D approaches point E .

In (Fig. 11), when D moves crossing out point 1, ribbon No. 11a changes the direction of its movement and extends down side . Its value reading would be negative in this case. See this position in (Fig. 12). When D takes the position J, the length of ribbon No. 11a would equal the radius of the circle with negative value, so the present invention demonstrates that: Min (Sin G) = -1

The present invention demonstrates physically that the XY- plane is divided into four quadrants. "First quarter part" of the invention is for demonstrating the said concepts in the first quadrant.

As we have seen before, red ribbon No.11 a appears with positive measures when point D is in the first or second quadrant, and appears with negative measures when point D is in the third or fourth quadrant . (Fig. 12). Thus Present invention demonstrates that the function Sin G represented by said ribbon No.11a takes its positive values in the first and second quadrants , while it takes its negative values in the third and fourth quadrants, as it is well known in mathematics.

Similarly , present invention demonstrates that Cos G appears with positive measures when point D is in the first and fourth quadrants , and appears with negative measures when point D is in the second and third quadrants .

Present invention demonstrates the following : (See (Fig. 11&12)) :
When D at position C : G=0°, length of red ribbon = 0.
   So : Sin 0° = 0. Similarly : Cos 0° = 1 .
When D at position E : G= 90° . Length of red ribbon = 1
   So: Sin 90° = 1. Similarly : Cos 90° = 0 .
When D at position I : G=180°. Length of red ribbon = 0
   So : Sin 180° = 0 . Similarly : Cos 180° = - 1 .
When D at position J : G= 270° . Length of red ribbon = -1
   So : Sin 270° = - 1 . Similarly : Cos 270° = 0 .
When D at position C : G= 360° . Length of red ribbon = 0
   So : Sin 360° = 0 . Similarly : Cos 360° = 1.
Sin 0° = Sin 360° = 0.
Cos 0° = Cos 360° = 1.

The present invention draws the graphs of the trigonometric functions . In (Fig. 13) we see the part of the apparatus which draws the graph of the Sin function. The whole said system is underneath of the said bars 4a, 5a and 6. The cylinder No.22 is rounded by a roll of paper or plastic, etc., for drawing on it . Cylindrical wheel No.23 is fixed close to the line No.13. Cylindrical wheel No.24 is connected to electrical motor No.25 located behind the board 1a . When motor 25 rotates, it will cause rotating of wheel No.24, in which it pulls out the front part of the paper No.27 towards it, i.e. from right side to left side .

Pen No.26 is connected to the bar No.5a at the position F, in fact little bit left of F, by a holder, in such a way that the said holder or base of the pen be at the middle of the said bar to allow the open part of knob D slides, not being obstructed by the said base of connection. See (Fig. 14). The said pen has a spring keeping it always pressing the paper No.27, in the same time the said spring allows pen 26 slides gently over the bar No.4a when it cross the point E from right to left, and cross the point J from left to right.

When switching on motor No.21 , it will start, causing knob D slides. If D moves up left, the bar 5a will raise up pulling the said pen No.26 upside . When D continue sliding , exceeding point E , the bar 5a will start lowing down, pulling the pen No.26 down side . The said pen will continue moving downside till it reaches point J. When knob D exceeds point J right side , the said pen will start raising up again .

Thus the said pen draws the diameter EJ of the circle 9, starting from the center R then the point E, returning back to R, then J, then R again, and so on . The said pen will continue this harmonic motion as long as D still rotating on the circle.

To draw the graph of Sin function, we switch on both of the two motors No.21 and No.25 at the same time . The regular motion of the two motors will cause regular motion of the paper, and regular motion of the pen No.26 on the said paper . The known graph of the Sin function will be drawn .

To draw the graph of Cos function, similar steps could be done, by fixing another pen at the point B with another roll of paper pulling down from up to down side .

To draw the graph of Tan function, similar steps could be done, by fixing another pen at the point M with more wider roll of paper . As angle G approaches 90° , the point M will go so far away that the graph drawn fitting the area of the paper would be good enough .

The invention clarifies the concept of Arc , that enables the student notice and see representations for infinite number of arcs ; how it and its measurements changes. In (Fig. 1), the blue shown arc denoted by H, with approximate value 60° . By moving of knob D we could obtain other arcs that have the values 10°, 20°, 30°, 40° ...etc.

The invention demonstrates that the arc depends on the existence of a definite circle, and that just knowing the length of an arc does not define it , and the circle in which the arc is taken as a part of it must be defined.

In (Fig. 1), the arc H has the same measure as like as the arc G of the inner small circle, despite of the variety of their length . The common value of the two arcs is about 60°.

The invention demonstrates the concept of radian as a unit of measurement for angles and arcs . By disconnecting the edge of rope H at the back of board 1a of (Fig. 11) pulling H toward center R of the circle 9, then the length of the same part of the rope H would be equal to the radius of said circle .

When the same part of rope H slides in its path again close to the circle 9, then the arc obtained is exactly one radian , because the length of the arc is equal to the radius of its circle .

## Claims

1. A mechanical apparatus for demonstrating a trigonometric circle and trigonometric functions comprising a board (1) which has a circle (9) and coordinate axes (X,Y) with origin drawn on the center of said circle the mechanical apparatus further comprises ;
a) rigid bars sliding along said circle (9) and perpendicularly to said coordinate axes (X,Y), the circle (9) denoting the trigonometric circle with point (D) sliding on the same (9), point (B) representing the projection of (D) on the X-axis while point (F) representing the projection of (D) on the Y-axis and (G) is the angle corresponding to the point (D)
b) a changeable ribbon (RB) provided on the X-axis representing Cos G,
c) a changeable ribbon (RF) provided on the Y-axis representing Sin G
d) a changeable ribbon (CM) provided on the bar (14) representing Tan G,
e) a changeable ribbon (EM) provided on the bar (14) representing Cot G whereby said mechanical apparatus and its components is adapted to move and slide while causing changes in the angle (G) and in the lengths of the said ribbons (RB, RF, CM, EM) hence causing changes in the trigonometric functions.

2. Mechanical apparatus for demonstrating trigonometric circle and functions as claimed in claim 1 wherein said rigid bars (2, 3, 14) are fixed on the said board (1) by clips or screws , wherein the said rigid bars (2, 3, 14) has grooves that allow sliding of the small segments (7, 8, 15) by ball bearing, such as every one of said segments (7, 8, 15) is a sliding base to a firmly connected perpendicular, thus bar (4) slides on the said board (1) right and left sides ever parallel to itself, because of the easy sliding of the connected segment (7) on its path throughout the groove in the bar (2), and so for bar (5) and segment (8).

3. Mechanical apparatus for demonstrating trigonometric circle and functions as claimed in claim 1, wherein the edge of bar (6) has a telescopic extension towards outside of (D) so that the said extension encounters the bar (14) when it been installed for studying the Tan or Cot functions, knowing that bar (6) has fixed length to provide circular motion to the point (D), wherein the other side of bar (6) has back part for connecting each of the plate (G), the electrical motors (25) and the rope (H).

4. Mechanical apparatus for demonstrating trigonometric circle and functions as claimed in claim 1, wherein there is an indicator to the angle (G) as a circular section plate well colored, located behind the said board (1), such as the said plate connected to the back-part of bar (6), in such a way that the said back-part pulls the said plate during its movement wherein the area of the said circular section increases with increasing of angle (G) and vice versa; at the same time the rope (H) is made of fiber glass, connected to the back part of bar (6) for representing the arc (CD) corresponding the same angle (G), either the angle (G) and the arc (H) belongs to the first quadrant of the plane or the angle (G) and the arc (H) belongs to the second, third and fourth quadrant, including the complete circle (9) wherein a small lamp is connected to the other edge of said rope (H) to keep it luminous.

5. Mechanical apparatus for demonstrating trigonometric circle and functions as claimed in claim 1, wherein sliding knobs (D) and (M) allow more than one rigid bar slide easily through it, thus knob (D) is articulated to the edge of bar (6), in the same time the said knob (D) allows the two bars (4, 5) slides through, while the knob (M) is articulated to sliding segment (15) and allows bar (6a) slides through; thus knob (D) moves on the circle (9) while the bars (4, 5) represent geometrical projectors of point (D) on the bars (2, 3), thus point (B) is the projection of (D) on bar (2); (F) is the projection of (D) on bar (3).

6. Mechanical apparatus for demonstrating trigonometric circle and functions as claimed in claim 1, wherein the ribbons (10, 11,16) represent (Sin G , Cos G , Tan G & Cot G) respectively, wherein and each of (10) and (11) rolled ribbon could be pulled out of a box (20) located behind the board (1), while the inner edge of the said rolled ribbons (10,11) pulled towards the center of the said box (20); wherein the edges of the ribbons (10, 11) raised up from a hole in the board (1) at the center (R) of the circle (9) ; wherein the said ribbons (10,11, 16) enable reading the approximate values of (Sin G , Cos G, Tan G, Cot G) through numbers and graduations fixated or printed on the said board (1) dose to lines (12, 13) and location of bar (14).

7. Mechanical apparatus for demonstrating trigonometric circle and functions as claimed in claim 1, wherein the indicator of Sin and Cos functions for the whole circle (9) part of the present invention is composed of transparent plastic tube with each of ribbons (16) and (11a) pulled out of a box (20) attached to transparent tube which makes a bridge over the system with said ribbon and small hook moving through the transparent tube , which has a long groove having for the movement of the hook, and two basis outside the components of the system , each one of the said basis has protrusions for installing at the board (1) in such a way that it could be installed and uninstalled easily, wherein the edge of the said ribbon (16) is connected by the hook to the knob (M).

8. Mechanical apparatus for demonstrating trigonometric circle and functions as claimed in claim 1, wherein the roll of paper or other drawing material is rotating around the axis (22) because the electrical motor (25) pulls paper from cylindrical axis (23) right side, hence pulling paper from the said roll on axis (22) left side.

9. Mechanical apparatus for demonstrating trigonometric circle and functions as claimed in claim 1 wherein the pen (26) is connected to a bar (5a) at the position (F), has a spring keeping it always pressing down and perpendicular to the drawing paper ; thus the pen (26) as it raising up and lowing down it draws the diameter (EJ) of the circle (9), starting from the center (R), then the point (E), returning back to (R), then (J), then (R) again, and so on; thus the said pen (26) will continue this vertical harmonic motion as long as (D) still rotating on the circle (9).

10. Mechanical apparatus for demonstrating trigonometric circle and functions as claimed in claim 1 wherein electrical motor (21, 21a) having gearboxes for slowing the motion, with connection axes is for moving back part of bar No.6 either for 90° or 360°, hence moving knob (D) regularly on the said circle (9), so that the said pen (26) by its vertical harmonic motion, draws the graph of Sin function during the movement of the said paper (27).

11. A mechanical apparatus for demonstrating trigonometric circle and functions according to claim 1 wherein said ribbons, coordinate axes (X,Y) and the projector lines have different colors for easy characterization.

## Patentansprüche

1. Ein mechanischer Apparat um einen trigonometrischen Kreis zu demonstrieren und trigonometrische Funktionen beinhaltend ein Brett (1) welches einen Kreis (g) hatund koordinierte Achsen (x,y) mit anfangend verzogenem an der Mitte des besagten Kreis, senkrecht zu dem mechanischen Apparat; außerdem beinhaltend;
a) montierten Querbalken gleitend entlang besagten Kreises (g) und besagten koordinierten Achsen (x,y) der Kreis (g) kennzeichnend den trigonometrischen Kreis mit Punkt (D) gleitend an dem gleichen (g), Punkt (B) repräsentierend die Projektion auf (D) an der Y-Achse und (G) ist der Winkel übereinstimmend zu dem Punkt (D)
b) ein auswechselbares Farbband (RB) vorausgesetzt an der x-Achse repräsentierend Cos G,
c) ein auswechselbares Farbband (RF) vorausgesetzt an der y-Achse repräsentierend Sin G,
d) ein auswechselbares Farbband (CM) vorausgesetzt an dem Querbalken (14) repräsentierend Tan G,
e) ein auswechselbares Farbband (EM) vorausgesetzt an dem Querbalken (14) repräsentierend Cot G
wodurch besagter mechanischer Apparat zusammen gesetzt ist, umgearbeitet zum bewegen und gleiten, während bewirkendem Wechsel in dem Winkel (G) und in der Länge des besagten Farbbandes (RB,RF,CM,EM) demnach bewirkendem Wechsel in den trigonometrischen Funktionen

2. Mechanischer Apparat zum demonstrieren trigonometrischen Kreis und Funktionen als gefordert im Auftrag 1 worin besagte montierte Querbalken (2,3,14) festgemach sind an dem besagten Brett (1) mit Klemmen oder Schrauben, worin die besagten montierten Querbalken (2,3,14) Rillen haben die ein Gleiten ermöglichen auf den kleinen Abschnitten (7,8,15) mit Kugellager, ein solches hat jedes einzelne von besagten Abschnitten (7,8,15) ist eine gleitende Grundlage zu einer befestigten, zusammenhängenden Senkrechte, folgender Querbalken (4) gleitend an dem besagten Brett (1) rechts und links Seiten jedes parallel zu sich selbst, wegen dem leichten Gleiten der zusammenhängenden Abschnitte (7) es ist am Pfad durchweg; die Rillen in dem Querbalken (2), und ebenso Querbalken (5) und Abschnitt(8).

3. mechanische Apparate zum demonstrieren trigonometrischer Kreise und Funktionen wie gefordert in Aufgabe 1, beinhalten die Schneide vom Querbalken (6) hat eine teleskopische Ausdehnung in Richtung Außenseite von (D) sodass die besagte Ausdehnung auf den Querbalken trifft (14) wenn es installiert wurde zum erforschen der Tan oder Cot Funktionen, wissend dieses Querbalkens (6) wurde in der Länge befestigt, beschaffen kreisförmig bewegt zu dem Punkt (D) worin die andere Seite vom Querbalken hat Rückenteil für jedes zusammenhängende von der Platte (G) der elektrische Motor (25) und das Seil (H).

4. Mechanische Apparate zum demonstrieren trigonometrischer Kreise und Funktionen wie gefordert in Aufgabe 1, worin dort ein Anzeiger ist an dem Winkel (G) als eine kreisförmige Schnittplatte gut bemalt, platziert hinter dem besagten Brett (1) ein solches an der besagten Platte zusammenhängend mit dem Rückteil des Querbalkens (6) als solches eine Methode in welcher das besagte Rückenteil durch besagte Platte zieht, während es in Bewegung ist, worin sich erhöht mit steigendem Winkel (G) und entgegengesetzt in der gleichen Zeit das Seil (H) ist hergestellt aus Faserglas zusammenhängend mit der Rückseite des Querbalkens (6) zum repräsentierenden Kreisbogen (CD) Übereinstimmung der gleiche Winkel (G), ebenfalls der Winkel (G) und der Kreisbogen (H) entlang zu dem zweiten, dritten und vierten Quadrant, inbegriffen der komplette Kreis (g) worin eine kleine Lampe zusammenhängend ist zu der anderen Schneide von besagtem Seil (H) um es zu beleuchten.

5. Mechanische Apparate zum demonstrieren trigonometrischer Kreise und Funktionen wie gefordert in Aufgabe 1, beinhaltend gleitende Griffe (D) und (M) erlaubt mehr als ein montierte Querbalken leicht hindurch gleitend , folgendermaßen der Griff (D) hervorhebend zu der Schneide des Querbalkens (6), in der gleichen Zeit der besagte Griff (D) erlaubt in zwei Querbalken (4,5) hindurch gleitend, während des Griffes (M) hervorhebend zu gleitendem Abschnitt (15) und erlaubten Querbalken (6a) hindurch gleitend, folgendermaßen der Griff (D) bewegend an dem Kreis (g) während der Querbalken (4,5) repräsentierender geometrischer Projektor am Punkt (D) an dem Querbalken (2,3) folgendermaßen der Punkt (B) ist die Projektion auf (D) am Querbalken (2); (F) ist die Projektion auf (D) am Querbalken (3),

6. Mechanische Apparate zum demonstrieren trigonometrischer Kreise und Funktionen wie gefordert in Aufgabe 1, beinhaltend die Farbbänder (10,11,16) repräsentierend (Sin G, Cos G, Tan G &Cot G) den jeweiligen, worin und jedes von (10) und (11) gerollte Borte kann aus einer Kiste gezogen werden (20) platziert hinter dem Brett (1), während der inneren Schneide von dem seitlich rollenden Farbbändern (10,11) gezogen in Richtung Mitte von der besagten Kiste; beinhaltend die Schneiden von den Farbbändern (10,11) angehoben von einem Loch in dem Brett (1) in der Mitte (R) auf dem Kreis (g); beinhaltend der besagte n Farbbändern (10,11,16) befähigend zum Pesen der entgegenkommenden Werte von (Sin G, Cos G, Tan G, Cot G) hindurch Nummern und die Staffelung befestigter oder gedrucktem an dem besagtem Brett (1) geschlossen zu Linien (12,13) und Platzierung von Querbalken (14).

7. Mechanische Apparate zum demonstrieren trigonometrischer Kreise und Funktionen wie gefordert in Aufgabe 1, worin der Anzeiger von Sin und Cos funktionieren für die esammten Kreise (9) Teil von der übereichten Erfindung ist zusammengesetztes, durchschaubares Plastikrohr mit jedem Farbband (16) und (11a) heraus gezogen aus der Kiste (20) angebracht an einem durchschaubaren Rohr, welche eine Brücke macht über de mSystem mit besagten Farbbändern und kleinen beweglichen Haken, hindurch des durchschaubaren Rohres, welche eine lange Rille hat, besitzend für die Bewegung von den Haken, und zwei Grundlagen ausserhalb der Zusammensetzung des Systems, jedes einzelne von den besagten Grundlagen hat Hervorstehungen für die Installation an dem Brett (1) in einem derartigen Weg, dass es leicht aufgebaut und abgebaut werden könnte, worin die Schneide an dem besagten Farbband ist (16) ist zusammenhängend bei dem Haken von dem Griff (M).

8. Mechanische Apparate zum demonstrieren trigonometrischer Kreise und Funktionen wie gefordert in Aufgabe 1, worin die Rolle von Papier oder anderes zeichnendes Material rundum die Achse rotiert (22) weil der elektrische Motor (25) Papier von der zylindrischen Achse zieht (23) rechte Seite, hier von Papier zieht von der besagten rollenden Achse (22) linke Seite.

9. Mechanische Apparate zum demonstrieren trigonometrischer Kreise und Funktionen wie gefordert in Aufgabe 1, worin der Füller (26)ist zusammenhängend mit einem Querbolken (5a) an der Position (F), hat ein andauernd hüpfendes welches immer herunter drückt und senkrecht zu dem zeichnenden Papier, folgender massen der Füller (26) wie es hochgeht und runtergeht es zeichnet den Diameter (EJ) von dem Kreis (g), anfangend von der Mitte (R) dann der Punkt (E), zurückkehrend zu (R), dann zu (J) dann wieder (R), und so weiter, folgender massen der besagte Füller (26) diese vertikale harmonische Bewegung wird so lange es geht immer wiederholt (D) noch abwechselnd am Kreis (9).

10. Mechanische Apparate zum demonstrieren trigonometrischer Kreise und Funktionen wie gefordert in Aufgabe 1, beinhaltet elektrische Motor (21,21a) haben Getriebeboxen zum verlangsamen der Bewegung, mit zusammenhängenden Achsen die zum zurückbewegenden Teil vom Querbalken Nr.6 ebenfalls für 90° oder 360°, infolge dessen bewegender Griff (D) regelmässig an dem besagten Kreis (g), so dass der besagte Füller (26) dabei ist die vertikale, harmonische Bewegung gezeichnet das Schaubild von Fehlfunkionen während der Bewegung auf dem besagtem Papier.

11. Mechanische Apparate zum demonstrieren trigonometrischer Kreise und Funktionen übereinstimmend zu Aufgabe 1, worin besagtes Farbband, Koordinierte Achsen (x;y) und das Vorführgerät Linien verschiedener Farben hat, für leichte Charakterisierung.

## Revendications

1. Un appareil mécanique pour démontrer un cercle trigonométrique et des fonctions trigonométriques comprenant une planche (1) ayant un cercle (9) et des axes coordonnés (x, y) avec origine dessinée au centre dudit cercle perpendiculairement à l'appareil mécanique qui comprend :
a) des barres rigides glissant au long dudit cercle (9) et desdits axes coordonnés (x, y), le cercle (9) dénote le cercle trigonométrique avec le point (D) glissant sur (9), le point (B) représente la projection de (D) sur l'axe X alors que le point (F) représente la projection de (D) sur l'axe Y et (G) est l'angle correspondant au point (D).
b) Un ruban changeable (RB) fourni sur l'axe X représentant Cos G.
c) Un ruban changeable (RF) fourni sur l'axe Y représentant Sin G.
d) Un ruban changeable (CM) fourni sur la barre (14) représentant Tan G.
e) Un ruban changeable (EM) fourni sur la barre (14) représentant Cot G.
Ledit appareil mécanique et ses composantes sont adaptés pour se déplacer et glisser en causant des changements dans l'angle (G) et dans les longueurs desdits rubans (RB, RF, CM, EM) et causant ainsi des changements dans les fonctions trigonométriques.

2. Un appareil mécanique pour démontrer un cercle et des fonctions trigonométriques comme ainsi revendiqué dans la revendication 1 dans lequel lesdits barres rigides (2, 3, 14) ont des cannelures permettant le glissement des petits segments (7, 8, 15) au moyen d'un roulement à billes, comme chacun desdits segments (7, 8, 15) est une base de glissement vers un perpendiculaire bien connecté, ainsi la barre (4) glisse sur ladite planche (1) les côtés droite et gauche toujours parallèles à eux-mêmes, en raison du glissement facile du segment connecté (7) sur son passage à travers la cannelure dans la barre (2), de même pour la barre (5) et le segment (8).

3. L'appareil mécanique pour démontrer le cercle trigonométrique et les fonctions comme ainsi revendiqué dans la revendication 1, dans lequel l'extrémité de la barre (6) a une extension télescopique vers l'extérieur de (D) afin que ladite extension rencontre la barre (14) lorsqu'elle est installée pour étudier les fonctions Tan ou Cot, sachant que la barre (6) a une longueur fixe pour fournir un mouvement circulaire au point (D), où l'autre côté de la barre (6) a une partie arrière pour connecter chacune des plaques (G), les moteurs électriques (25) et la corde (H).

4. L'appareil mécanique pour démontrer le cercle trigonométrique et les fonctions comme ainsi revendiqué dans la revendication 1, dans lequel il y a un indicateur à l'angle (G) comme une section de plaque circulaire bien colorée, située derrière ladite planche (1); ladite plaque est connectée à la partie arrière de la barre (6) de telle sorte que ladite partie arrière tire ladite plaque pendant son mouvement dans la zone de ladite section circulaire augmente avec l'augmentation de l'angle (G) et vice versa; en même temps, la corde (H) est faite de fibre de verre, connectée à la partie arrière de la barre (6) pour représenter l'arc (CD) correspondant au même angle (G), l'angle (G) et l'arc (H) tous deux appartiennent au premier quadrant de la plane de l'angle (G) et l'arc (H) appartient au deuxième, troisième et quatrième quadrants, y compris tout le cercle (9) dans lequel une petite lampe est connectée à l'autre extrémité de ladite corde (H) pour la maintenir lumineuse.

5. L'appareil mécanique pour démontrer le cercle trigonométrique et les fonctions comme ainsi revendiqué dans la revendication 1, dans lequel des boutons glissant (D) et (M) permettent à plus d'une seule barre rigide de glisser facilement à travers eux, donc le bouton (D) est articulé au à l'extrémité de la barre (6), en même temps ledit bouton (D) permet aux deux barres (4, 5) de glisser à travers, alors que le bouton (M) est articulé au segment glissant (15) et permet à la barre (6a) de glisser à travers; donc le bouton (D) bouge sur le cercle (9) alors que les barres (4, 5) représentent des projecteurs géométrique du point (D) sur les barres (2, 3), donc le point (B) est la projection de (D) sur la barre (2); (F) est la projection de (D) sur la barre (3).

6. L'appareil mécanique pour démontrer le cercle trigonométrique et les fonctions comme ainsi revendiqué dans la revendication 1, dans lequel les rubans (10, 11, 16) représentent (Sin G, Cos G, Tan G et Cot G) respectivement, où chacun des rubans roulés (10) et (11) peut être tiré vers l'extérieur d'une boîte (20) située derrière la planche (1), tandis que l'extrémité interne desdits rubans roulés (10, 11) est tiré vers le centre de ladite boîte (20); où les extrémités des rubans (10, 11) relevés vers le haut à partir d'un trou dans la planche (1) au centre (R) du cercle (9); où lesdits rubans (10, 11, 16) permettent de lire la valeur approximative de (Sin G, Cos G, Tan G, Cot G) à travers des nombres et des graduations fixées ou imprimées sur ladite planche (1) proche des lignes (12, 13) et l'emplacement de la barre (14).

7. L'appareil mécanique pour démontrer le cercle trigonométrique et les fonctions comme ainsi revendiqué dans la revendication 1, dans lequel l'indicateur des fonctions de Sin et de Cos pour la totalité du cercle (9), une partie de la présente invention, est composé d'un tube de plastique transparent avec chacun des rubans (16) et (11a) tirés vers l'extérieur de la boîte (20) attachés à un tube transparent faisant un pont au-dessus du système avec ledit ruban et un petit crochet se déplaçant à travers le tube transparent, qui a une longue cannelure pour le mouvement du crochet, et deux bases à l'extérieur des composantes du système, chacune desdites bases a une saillie pour installation sur la planche (1) de telle sorte qu'elle peut être installée et désinstallée facilement, où l'extrémité dudit ruban (16) est connecté au bouton (M) par le crochet.

8. L'appareil mécanique pour démontrer le cercle trigonométrique et les fonctions comme ainsi revendiqué dans la revendication 1, dans lequel le rouleau de papier ou un autre matériel pour dessiner tourne autour de l'axe (22) parce que le moteur électrique (25) tire le papier de l'axe cylindrique (23) côté droite, tirant ainsi le papier dudit rouleau sur l'axe (22) côté gauche.

9. L'appareil mécanique pour démontrer le cercle trigonométrique et les fonctions comme ainsi revendiqué dans la revendication 1, dans lequel le stylo (26) est connecté à une barre (5a) à la position (F), a un ressort qui le maintient en état de pousser toujours vers le bas et perpendiculaire au papier à dessin; donc le stylo (26)pendant sa montée et descente dessine le diamètre (EJ) du cercle (9), commençant à partir du centre (R), puis le point (E), retournant à (R), puis (J), puis (R) encore et ainsi; donc ledit stylo (26) va continuer cet harmonieux mouvement vertical tant que (D) tourne encore sur le cercle (9).

10. L'appareil mécanique pour démontrer le cercle trigonométrique et les fonctions comme ainsi revendiqué dans la revendication 1, dans lequel le moteur électrique (21, 21a) a des boîtes de vitesse pour ralentir le mouvement, avec des axes de connexion pour faire bouger la partie arrière de la barre n° 6 soit pour 90° ou 360°, faisant ainsi bouger régulièrement le bouton (D) sur ledit cercle (9), pour que ledit stylo (26) par son harmonieux mouvement vertical dessine le graphique de la fonction Sin pendant le mouvement dudit papier (27).

11. L'appareil mécanique pour démontrer le cercle trigonométrique et les fonctions comme ainsi revendiqué dans la revendication 1, dans lequel lesdits rubans coordonnent les axes (X, Y) et les lignes du projecteur ont des couleurs différentes pour faciliter la caractérisation.
